(19) Europäisches Patentamt
European Patent Office
Office européen des brevets

(11) EP 3 303 492 B1

(12) **EUROPEAN PATENT SPECIFICATION**

(45) Date of publication and mention of the grant of the patent:
**04.05.2022 Bulletin 2022/18**

(21) Application number: **16800522.1**

(22) Date of filing: **20.05.2016**

(51) International Patent Classification (IPC):
***C09J 183/04*** (2006.01) ***C08G 18/48*** (2006.01)
***C08G 18/66*** (2006.01) ***C08G 18/80*** (2006.01)
***C09D 175/08*** (2006.01) ***C08G 18/32*** (2006.01)
***C09J 7/20*** (2018.01) ***C09J 7/30*** (2018.01)
***C09J 7/50*** (2018.01) ***C08G 77/16*** (2006.01)

(52) Cooperative Patent Classification (CPC):
**C08G 18/3206; C08G 18/4837; C08G 18/4854; C08G 18/6677; C08G 18/8029; C09D 175/08; C09J 7/20; C09J 183/04;** C08G 77/16; C09J 2433/003; C09J 2475/003; C09J 2483/00

(86) International application number:
**PCT/US2016/033408**

(87) International publication number:
**WO 2016/191235 (01.12.2016 Gazette 2016/48)**

# (54) ADHESIVE SHEET

KLEBEFOLIE

FEUILLE ADHÉSIVE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.05.2015 JP 2015108783**

(43) Date of publication of application:
**11.04.2018 Bulletin 2018/15**

(73) Proprietor: **3M Innovative Properties Company**
**St. Paul, MN 55133-3427 (US)**

(72) Inventor: **SAKURAI, Aizoh**
**Tokyo 141-8684 (JP)**

(74) Representative: **Mathys & Squire**
**Theatinerstraße 7**
**80333 München (DE)**

(56) References cited:
**US-A1- 2012 114 953**
**US-A1- 2013 045 379**
**US-A1- 2014 110 048**
**US-A1- 2014 349 108**
**US-A1- 2015 044 456**
**US-B2- 7 199 183**
**US-B2- 8 603 630**

EP 3 303 492 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### FIELD OF THE INVENTION

The present invention relates to an adhesive sheet.

### BACKGROUND

Various types of adhesive agents, such as acrylic-based, silicone-based, and natural rubber-based adhesive agents, have been known as adhesive agents that constitute adhesive sheets. Adhesive agents may be subjected to crosslinking for use; and radiation curing may be used as a method of crosslinking.

### SUMMARY

For cases where the adhesive sheet is provided as a laminate, when each sheet is taken out, an adhesive layer is sometimes separated from its base material and remains on a base material of an adjacent sheet in the laminate. Furthermore, when the adhesive sheet is temporarily attached to an adherend, such as skin, and then peeled off, its adhesive layer and base material could be separated upon the peeling, thereby leaving only the adhesive layer on the adherend. In order to ensure sufficient anchoring characteristics (hereinafter, also referred to as "anchoring effect") between a base material and an adhesive layer, an adhesive sheet may be provided with a primer layer sandwiched between the base material and the adhesive layer.

The present invention provides an adhesive sheet comprising: a base material, a primer layer, and an adhesive layer cured by radiation, arranged in this order; the primer layer containing a cross-linked polyurethane having, as constituents, a polyol including polyoxyalkylene polyol, and a polyisocyanate; and the polyoxyalkylene polyol being polyoxypropylene polyol and/or polyoxyethylene polyoxypropylene polyol, and the polyisocyanate containing a tri- or higher-functional polyisocyanate.

The adhesive sheet according to the present invention exhibits excellent anchoring characteristics between a base material and an adhesive layer, and even after being stored for a long period of time, the base material and the adhesive layer are not likely to separate when the adhesive sheet is peeled off.

### DETAILED DESCRIPTION

An embodiment of the present invention will be described in detail below.

A first embodiment of the present invention is an adhesive sheet comprising: a base material, a primer layer, and an adhesive layer cured by radiation, arranged in this order; the primer layer containing a cross-linked polyurethane having, as constituents, a polyol including polyoxyalkylene polyol, and a polyisocyanate; and the polyoxyalkylene polyol being polyoxypropylene polyol and/or polyoxyethylene polyoxypropylene polyol, and the polyisocyanate containing a tri- or higher-functional polyisocyanate.

The base material is a supporting body that supports the primer layer and the adhesive layer, and the overall shape thereof can be, for example, a film shape or roll shape. As the base material, in addition to flat materials that have no holes or unevenness, fiber-like materials, mesh-like materials, materials with holes, materials with unevenness, such as an embossed pattern, on surfaces thereof, or the like can be used depending on the application target and/or intended use. Examples of the material that constitutes the base material include polyurethanes, polyesters, and polyvinyl chlorides. Examples of the polyester include polyethylene terephthalates.

The polyurethane contained in the primer layer has a structure in which polyurethane is crosslinked. This crosslinked structure can be obtained by using a polyfunctional (branched) material as a polyol and/or polyisocyanate constituting the polyurethane.

The polyol constituting the cross-linked polyurethane include polyoxypropylene polyol and/or polyoxyethylene polyoxypropylene polyol, which are polyoxyalkylene polyol. The polyoxyalkylene polyol is a high molecular weight polyol having two or more hydroxy groups. Here, "high molecular weight polyol" refers to a polyol having a molecular weight (number average molecular weight) of 150 or greater. As long as the polyol includes this polyoxyalkylene polyol, the polyol may include another polyol.

The number average molecular weight of the polyoxypropylene polyol and the polyoxyethylene polyoxypropylene polyol is preferably from 500 to 15,000, more preferably from 1,000 to 10,000, and even more preferably from 1,500 to 5,000.

The content of the oxyethylene unit of the polyoxyethylene polyoxypropylene polyol is preferably 80 or less, more preferably 60 or less, and even more preferably 50 or less, relative to the total mass. In other words, in the polyoxyethylene polyoxypropylene polyol, the mass of the oxypropylene unit relative to the mass of the oxyethylene unit

is preferably 0.25 or greater, more preferably 0.66 or greater, and even more preferably 1.0 or greater. By setting the mass of the oxypropylene unit relative to the mass of the oxyethylene unit to be 0.25 or greater, the adhesive sheet exhibits better peel strength, and also exhibits better anchoring characteristics after being stored at high temperatures.

The polyoxypropylene polyol and the polyoxyethylene polyoxypropylene polyol may be bi- to hexa-functional. Here, "bi- to hexa-functional" refers to a condition where two to six hydroxy groups are contained in a molecule. These polyoxyalkylene polyols are preferably bi- or tri-functional, and it is also possible to use only bifunctional polyoxyalkylene polyols. Furthermore, the polyoxyalkylene polyols may be a mixture of bifunctional polyoxyalkylene polyol and trifunctional polyoxyalkylene polyol. Note that the molecular shape may be linear or branched.

The hydroxyl equivalent of the polyoxypropylene polyol and the polyoxyethylene polyoxypropylene polyol is preferably from 250 to 7,500 g/eq, more preferably from 500 to 5,000 g/eq, and even more preferably from 750 to 2,000 g/eq.

The polyoxyethylene polyoxypropylene polyol may be a random copolymer or a block copolymer. When the polyoxyethylene polyoxypropylene polyol is a block copolymer, a triblock copolymer may have a structure containing polyoxyethylene-polyoxypropylene-polyoxyethylene (POE-POP-POE) or polyoxypropylene-polyoxyethylene-polyoxypropylene (POP-POE-POP). The polyoxyethylene polyoxypropylene polyol is more preferably POE-POP-POE since it is possible to enhance the reactivity.

Examples of another polyol include tri- or higher-functional low molecular weight polyols. Here, "low molecular weight polyol" refers to a polyol having a molecular weight (number average molecular weight) of less than 150. Examples of the tri- or higher-functional low molecular weight polyol include trimethylolpropane, glycerin, pentaerythritol; and, trifunctional low molecular weight polyols such as trimethylolpropane and glycerin are preferable.

When the tri- or higher-functional low molecular weight polyol is used, the hydroxyl equivalent of the tri- or higher-functional low molecular weight polyol (for cases where the polyoxyalkylene polyol includes trifunctional polyoxyalkylene polyol, the total hydroxyl equivalent with trifunctional polyoxyalkylene polyol) is preferably 50% or less, more preferably 40% or less, and even more preferably 30% or less, relative to the total hydroxyl equivalent of the used polyols. Here, "hydroxyl equivalent" is a value obtained by dividing the molecular weight of the low molecular weight polyol by the number of hydroxy groups. Furthermore, the hydroxyl equivalent can be calculated from hydroxyl value according to the following formula:

$$\text{(Hydroxyl equivalent)} = \text{(Molecular weight of low molecular weight polyol)} / \{\text{(Hydroxyl value)} / 56 \times 17\}$$

Note that the hydroxyl value is a value obtained in accordance with JIS K1557-1:2007, and, for example, means the amount, in milligram (mg), of potassium hydroxide (molecular weight: 56) that is equivalent to the amount of hydroxy group in 1 g of the low molecular weight polyol.

By adjusting the total hydroxyl equivalent of the tri- or higher-functional low molecular weight polyols to be 50% or less, it is possible to prevent crosslinking density from being too high, and to prevent the primer layer from being too hard.

The cross-linked polyurethane can be obtained by the reaction between the polyol and the polyisocyanate described above. The polyisocyanate contains a tri- or higher-functional polyisocyanate. When only a bifunctional polyol is used as the polyol, a tri- or higher-functional polyisocyanate is preferably used as the polyisocyanate. When a trifunctional polyol is contained as the polyol, a combination of a bifunctional polyisocyanate and a tri- or higher-functional polyisocyanate, or only a tri- or higher-functional polyisocyanate alone may be used as the polyisocyanate. Note that "tri- or higher-functional polyisocyanate" refers to a condition where three or more isocyanate groups are contained in a molecule.

Examples of bifunctional polyisocyanate include hexamethylene diisocyanate, diphenylmethane diisocyanate, dicyclohexylmethane diisocyanate, isophorone diisocyanate, tolylene diisocyanate. Examples of the tri- or higher-functional isocyanates include triisocyanate and tetraisocyanate; however, from the perspective of imparting suitable pliability to the primer layer, triisocyanate (trifunctional polyisocyanate) is preferable. Examples of the triisocyanate include an addition-type triisocyanate in which three molecules of diisocyanates are addition reacted to one molecule of triol, and an isocyanurate modified product which is a trimer of diisocyanate.

Examples of the addition-type triisocyanate include an adduct of tolylene diisocyanate with three molecules of trimethylolpropane (available as Coronate L (manufactured by Tosoh Corporation)). Examples of the isocyanurate modified product include an isocyanurate modified product of three molecules of 2,4-tolylenediisocyanate.

As long as the resulting polyurethane is cross-linked, polyisocyanates other than the polyisocyanate described above, such as aliphatic polyisocyanate, aromatic polyisocyanate, and alicyclic polyisocyanate, can be used as the polyisocyanate.

In the present embodiment, the cross-linked polyurethane is preferably obtained by reacting the polyoxyalkylene

polyol, the trifunctional polyisocyanate, and the trifunctional low molecular weight polyol described above.

The cross-linked polyurethane may be obtained by a reaction that makes the ratio of the isocyanate equivalent to the hydroxyl equivalent (NCO/OH ratio) to be 0.6 to 1.4, 0.7 to 1.3, or 0.8 to 1.2. Note that "isocyanate equivalent" is a value obtained by dividing the molecular weight of the polyisocyanate by the number of isocyanate groups.

The adhesive sheet according to the present embodiment can be produced by the following method, for example. Specifically, a primer composition containing a cross-linked polyurethane having, as constituents, a polyol including polyoxyalkylene polyol, and a polyisocyanate is prepared. Then, this primer composition is spread over a base material to form a primer layer on the surface of the base material. In this case, heating may be performed. Thereafter, an adhesive agent that can be cured by radiation is spread over the primer layer, and cured by irradiation to obtain an adhesive sheet.

Note that, when the adhesive sheet is produced by such a method, the adhesive sheet exhibits superior anchoring effect since radicals are generated from the adhesive agent due to irradiation and reacted with a component that constitutes the primer layer. For the adhesive sheet of the present embodiment, particularly excellent anchoring effect is exhibited when the material of the base material is a polyurethane.

The adhesive sheet of the first embodiment comprises the adhesive layer cured by radiation. "Radiation" refers to radiation (ionizing radiation) that exhibits a high energy beam such as an electron beam or gamma rays, and does not refer to non-ionizing radiation such as ultraviolet light. Examples of the adhesive agent that forms the adhesive layer include silicone-based adhesive agents (e.g. agents in which silicone-based tackifier such as MQ resin has been added to polyorganosiloxane), acrylic-based adhesive agents. In the present embodiment, silicone-based adhesive agents are particularly effective.

The adhesive layer may be formed from an adhesive agent that has high molecular weight sufficient to exhibit adhesion before curing the layer via radiation, or may use a material that exhibits adhesion only after the molecular weight thereof is increased via irradiation. For the latter case, the adhesive layer is in a monomeric or oligomeric state prior to the radiation curing; and elongation, crosslinking, or the like of the molecular chain occurs upon the irradiation.

When an adhesive layer cured by radiation is provided on a primer layer, a method that laminates an adhesive layer that has been cured by an electron beam on a primer layer, or a method that laminates an adhesive layer on a primer layer and then cures the adhesive agent by irradiating the entire assembly with an electron beam can be used. The latter method is preferably employed since the latter method allows generation of radicals from the adhesive agent via irradiation and allows the radicals to react with a component that constitutes the primer layer, thereby achieving superior anchoring effect.

For the adhesive sheet of the present embodiment, superior anchoring effect is exhibited when the material of the base material is a polyurethane.

A second embodiment of the present invention is an adhesive sheet according to the first embodiment further comprising, in between the base material and the primer layer, a second primer layer containing a (meth)acrylic polymer having a nitrogen-containing group. Note that "(meth)acryl" refers to "acryl" or "methacryl", and this also applies to similar expressions such as "(meth)acrylate".

In the second embodiment, definitions and preferable examples for configurations that are the same with the first embodiment are the same as described above.

The (meth)acrylic polymer having a nitrogen-containing group contained in the second primer layer is a polymer having, as a monomer unit, a monomer containing a (meth)acryloyl group. This polymer may be a homopolymer or copolymer. Here, the nitrogen-containing group is a functional group having a nitrogen atom, and this functional group may be a hydrophilic functional group. Examples of the nitrogen-containing group include amino groups, amide groups, and imide groups. For cases where the nitrogen-containing group can undergo substitution, such as amino groups and amide groups, the nitrogen-containing group may be substituted with, for example, an alkyl group having from 1 to 22 carbons. This alkyl group may be further substituted with a polyoxyalkylene group, polyaminoalkylene group, or the like, and the alkylene group may be, for example, an alkylene group having from 2 to 4 carbons. Note that the nitrogen-containing group may be in a form of salt such as an onium salt.

The nitrogen-containing group may be arranged at any position in the (meth)acrylic polymer. The monomer unit constituting the (meth)acrylic polymer is described as follows: in the case of amino groups and amide groups, the nitrogen-containing group may be directly bonded to the (meth)acryloyl group or may be present by bonding to a group that has been bonded to the (meth)acryloyl group (for example, alkyloxy group). For cases where the nitrogen-containing group is an imide group, the nitrogen-containing group is present at a non-terminal moiety of the monomer unit. Such a monomer can be obtained by, for example, reacting a (meth)acrylic acid with a hydroxyalkyl imide obtained by reacting a cyclic acid anhydride with amino alkyl alcohol.

The weight average molecular weight of the (meth)acrylic polymer having a nitrogen-containing group may be from 5,000 to 1,000,000, or may be from 10,000 to 100,000. Furthermore, the amine hydrogen equivalent may be from 300 to 2000 (g solid/eq).

The (meth)acrylic polymer having a nitrogen-containing group is preferably a (meth)acrylate polymer having an amino group. This (meth)acrylate polymer having an amino group may be a copolymer having, as monomer units,

a (meth)acrylic monomer having an amino group and a (meth)acrylic acid ester. Note that the (meth)acrylic monomer having an amino group, which is a monomer unit, is preferably in a form where an amino group is bonded to an alkyloxy group that has been bonded to a (meth)acryloyl group (i.e. aminoalkyl (meth)acrylate).

Examples of the (meth)acrylate polymer having a nitrogen-containing group include a polymer having a structure represented by general formula (1) below.

[Formula 1]

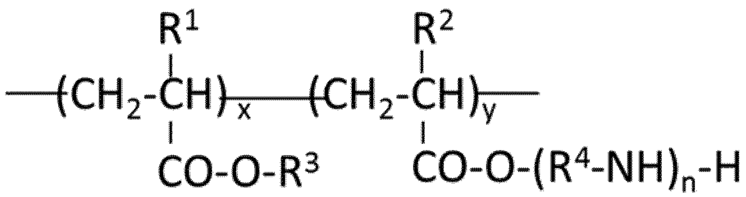

···(1)

In the formula, $R^1$ and $R^2$ are each independently a methyl group or a hydrogen atom; $R^3$ is an alkyl group having from 1 to 22 carbons; $R^4$ is an alkylene group having from 2 to 4 carbons; x is a number from 1 to 2,000; y is a number from 1 to 2,000; and n is a number from 1 to 100. $R^3$ may be an alkyl group having from 1 to 18 carbons; and $R^4$ may be an alkylene group having 2 carbons. x is preferably from 50 to 1,500; y is preferably from 50 to 1,500; and x and y may be numbers such that the sum of x and y is from 100 to 1,500.

The content of the (meth)acrylic polymer having a nitrogen-containing group in the second primer layer may be 50% by mass or greater, 70% by mass or greater, or 90% by mass or greater, in terms of the total mass of the second primer layer.

As the (meth)acrylic polymer having a nitrogen-containing group contained in the second primer layer, the same polymer as those that may be contained in the primer layer of the first embodiment may be used. Among them, polymers having a structure of general formula (1) is preferable.

The adhesive sheet according to the present embodiment can be obtained by spreading the second primer composition containing the (meth)acrylic polymer having a nitrogen-containing group over a base material (then optionally heating) to form a second primer layer on the surface of the base material, forming a primer layer on the second primer layer in the same manner as in the first embodiment, spreading an adhesive agent over the primer layer and irradiating the assembly with radiation to cure the adhesive agent.

The adhesive sheet according to the present embodiment can be produced by the following method, for example. Specifically, a second primer layer is formed by spreading a composition containing the (meth)acrylic polymer having a nitrogen-containing group on the surface of a base material. Thereafter, a primer composition containing a cross-linked polyurethane having, as constituents, a polyol including polyoxyalkylene polyol, and a polyisocyanate is prepared. Then, this primer composition is spread over the second primer layer on the base material to form a primer layer on top of the second primer layer. In this case, heating may be also performed. Thereafter, an adhesive agent that can be cured by radiation is spread over the primer layer, and cured by irradiation to obtain an adhesive sheet. The obtained adhesive sheet may further comprise a release liner (same applies for other embodiments).

For the adhesive sheet of the present embodiment, superior anchoring effect is exhibited when the material of the base material is a polyester and/or polyvinyl chloride.

## EXAMPLES

The present invention will be described more in detail with reference to working examples and comparative examples.

### Experimental Example 1

<Preparation of primer compositions P1 to P5>

To a methyl ethyl ketone solution of one of polyoxyalkylene polyols 1 to 5, trifunctional low molecular weight polyol 1 and polyisocyanate 1 were sequentially added at proportions described in Table 1. Thereafter, the mixture was mixed well to prepare a polyurethane composition. The obtained polyurethane compositions were used as primer compositions P1 to P5. When the primer compositions P1 to P5 were prepared, the amount of the methyl ethyl ketone was adjusted so that the concentration of polyurethane became 15% by mass. Note that, in Table 1, the amounts of polymer

polyols 1 to 5 and trifunctional low molecular weight polyol 1 are described in terms of the hydroxyl equivalent, and the amount of polyisocyanate 1 is described in terms of the isocyanate equivalent.

[Table 1]

| | P1 | P2 | P3 | P4 | P5 |
|---|---|---|---|---|---|
| Trifunctional polyisocyanate 1 | 120 | 120 | 120 | 120 | 120 |
| Polyoxyalkylene polyol 1 | 70 | - | - | - | - |
| Polyoxyalkylene polyol 2 | - | 70 | - | - | - |
| Polyoxyalkylene polyol 3 | - | - | 70 | - | - |
| Polyoxyalkylene polyol 4 | - | - | - | 70 | - |
| Polyoxyalkylene polyol 5 | - | - | - | - | 70 |
| Trifunctional low molecular weight polyol 1 | 30 | 30 | 30 | 30 | 30 |

Trifunctional polyisocyanate 1: Coronate L (trade name; manufactured by Nippon Polyurethane Industry Co., Ltd.) was used. Coronate L is an ethyl acetate solution of trimethylolpropane adduct of tolylene diisocyanate; and its isocyanate equivalent is 311.11 g/eq.
Polyoxyalkylene polyol 1: CM-294 (trade name; manufactured by Adeka Corporation) was used. CM-294 is a triblock copolymer having a number average molecular weight of approximately 2,900 g/mol; its ratio of the oxyethylene unit to the oxypropylene unit is 40:60; and the hydroxyl equivalent thereof is 1,450 g/eq.
Polyoxyalkylene polyol 2: Plonon #202B (trade name; manufactured by NOF Corporation) was used. Plonon #202B is a triblock copolymer having a number average molecular weight of approximately 2,400 g/mol; its ratio of the oxyethylene unit to the oxypropylene unit is 20:80; and the hydroxyl equivalent thereof is 1,200 g/eq.
Polyoxyalkylene polyol 3: Pluronic L-61 (trade name; manufactured by Adeka Corporation) was used. Pluronic L-61 is a triblock copolymer having a number average molecular weight of approximately 2,000 g/mol; its ratio of the oxyethylene unit to the oxypropylene unit is 10:90; and the hydroxyl equivalent thereof is 1,000 g/eq.
Polyoxyalkylene polyol 4: Polyether P-3000 (trade name; manufactured by Adeka Corporation) was used. Polyether P-3000 is a polyoxypropylene polyol having a number average molecular weight of 3,030 g/mol; and the hydroxyl equivalent thereof is 1,516.5 g/eq.
Polyoxyalkylene polyol 5: Polyserine DCB-1000 (trade name; manufactured by NOF Corporation) was used. Polyserine DCB-1000 is a random copolymer having a number average molecular weight of approximately 1,000 g/mol; its ratio of the oxytetramethylene unit to the oxypropylene unit is 45:55; and the hydroxyl equivalent thereof is 500 g/eq.
Trifunctional low molecular weight polyol 1: a mixture of trimethylolpropane and glycerin (mass ratio was 1:1) was used. The hydroxyl equivalent of the mixture was 36.41 g/eq.

<Preparation of adhesive sheet>

(1) Preparation of base material

On a silicone-treated polyethylene terephthalate carrier film, polyurethane (trade name: Estane 58309; manufactured by Lubrizol) was extruded in a manner that the thickness was 15 μm, and laminated.

(2) Coating of primer to base material

On the polyurethane-side surface of the base material described above, one of the primer compositions P1 to P5 was spread using a wire bar (manufactured by Marukyo Giken K.K.; Wire bar #5) and heated in an oven at 110°C for 2 minutes to coat the base material surface with a primer layer.

(3) Preparation of adhesive agent composition

To 100 parts by mass of silanol-terminated polydimethylsiloxane (trade name: Wacker elastomer 350N; manufactured by Wacker Chemie AG), 60 parts by mass of MQ resin (trade name: MQ803TF; manufactured by Wacker Chemie AG) was added as a tackifier to prepare a silicone-based adhesive agent composition. (4) Preparation of adhesive sheet
On the primer of the base material formed from the polyurethane coated with the primer composition described

above, or on a base material formed from a polyurethane that has not been treated with a primer, the silicone-based adhesive agent composition described above was spread using a knife coater in a manner that the thickness of the adhesive layer became 50 μm. Thereafter, the adhesive agent composition was immediately cured by irradiating the silicone-based adhesive agent composition, which was spread, with an electron beam (60 KGy) using an electron beam generating device CB300 at an accelerating voltage of 180 keV. Therefore, adhesive sheets of Working Examples 1 to 4 and Comparative Examples 1 to 4 were produced.

The relation between the obtained adhesive sheets of Working Examples 1 to 4 and Comparative Examples 1 to 4 and the primer compositions P1 to P5 are as described in Table 2.

[Table 2]

| | Primer layer | Material of base material |
|---|---|---|
| Working Example 1 | P1 | Polyurethane |
| Working Example 2 | P2 | Polyurethane |
| Working Example 3 | P3 | Polyurethane |
| Working Example 4 | P4 | Polyurethane |
| Comparative Example 1 | - | Polyurethane |
| Comparative Example 2 | Polyoxyalkylene polyol 1 | Polyurethane |
| Comparative Example 3 | Polyoxyalkylene polyol 4 | Polyurethane |
| Comparative Example 4 | P5 | Polyurethane |

<Anchoring characteristic test>

On the surface of the base material of the obtained adhesive sheet, a stainless steel plate was fixed using double-sided adhesive tape (trade name: ST-416; manufactured by 3M), and a fluorosilicone liner was peeled off from the adhesive layer. Thereafter, a piece of silicone tape (trade name: 8403; manufactured by 3M; width: 1 inch) was fixed on the surface of the exposed adhesive layer, and a laminate was obtained. Then, using a 2 kg roller, each layer of the obtained laminate was sufficiently pressure-bonded. Subsequently, each of the pressure-bonded laminate was stored under one of the following storing conditions 1 to 3. Thereafter, the peel strength (N/inch) for the case where the silicone tape was peeled off at an angle of 180° at a rate of 30 cm/min, and the appearance were evaluated.

Storing condition 1: Temperature: 23°C, for 7 days
Storing condition 2: Temperature: 70°C (using an oven), for 7 days
Storing condition 3: Temperature: 65°C (using an oven), relative humidity: 80%RH, for 7 days

Evaluation results for the peel strength are shown in Table 3, and evaluation results for the appearance are shown in Table 4. Note that, in Table 4, "A" refers to a condition where the base material and the adhesive layer were completely separated (i.e. any one of anchoring characteristics between the adhesive layer and the base material, between the adhesive layer and the primer layer, or between the primer layer and the base material was insufficient). "B" refers to a condition where the silicone tape and the adhesive layer were completely separated. "C" refers to a condition where the adhesive layer was separated in a manner that the adhesive layer was broken while maintaining its adhesion and that the adhesive layer remained on both the silicone tape and the base material. Furthermore, a numerical value for this evaluation in Table 4 indicates a proportion of the area in which the condition of A, B, or C was observed relative to the area, which was taken to be 10, of the entire contact surface of the base material and the adhesive layer.

[Table 3]

| | Storing condition 1 | Storing condition 2 | Storing condition 3 |
|---|---|---|---|
| Working Example 1 | 6.9 | 9.6 | 8.4 |
| Working Example 2 | 9.0 | 10.1 | 7.8 |
| Working Example 3 | 9.5 | 11.0 | 7.8 |
| Working Example 4 | 7.7 | 8.7 | 9.0 |

(continued)

| | Storing condition 1 | Storing condition 2 | Storing condition 3 |
|---|---|---|---|
| Comparative Example 1 | 7.2 | 11.3 | 7.4 |
| Comparative Example 2 | 8.2 | 12.6 | 9.1 |
| Comparative Example 3 | 5.3 | 10.1 | 7.0 |
| Comparative Example 4 | 9.6 | 10.1 | 5.9 |

[Table 4]

| | Storing condition 1 | | | Storing condition 2 | | | Storing condition 3 | | |
|---|---|---|---|---|---|---|---|---|---|
| | A | B | C | A | B | C | A | B | C |
| Working Example 1 | 0 | 0 | 10 | 0 | 9 | 1 | 0 | 5 | 5 |
| Working Example 2 | 0 | 1 | 9 | 0 | 6 | 4 | 0 | 6 | 4 |
| Working Example 3 | 0 | 2 | 8 | 0 | 6 | 4 | 0 | 2 | 8 |
| Working Example 4 | 0 | 2 | 8 | 0 | 2 | 8 | 0 | 9 | 1 |
| Comparative Example 1 | 7 | 0 | 3 | 9 | 0 | 1 | 9 | 0 | 1 |
| Comparative Example 2 | 3 | 0 | 7 | 0 | 5 | 5 | 0 | 0 | 10 |
| Comparative Example 3 | 10 | 0 | 0 | 10 | 0 | 0 | 10 | 0 | 0 |
| Comparative Example 4 | 0 | 9 | 1 | 8 | 0 | 2 | 10 | 0 | 0 |

The adhesive sheets of Working Examples 1 to 4 exhibited sufficient anchoring characteristics even after being stored under one of the storing conditions 1 to 3. On the other hand, for the adhesive sheets of Comparative Examples 1 to 4, there were many cases where the base material and the adhesive layer were separated. The adhesive sheets of Comparative Examples 1 to 4 exhibited insufficient anchoring characteristics.

Experimental Example 2

<Preparation of primer compositions>

As the primer composition, the primer compositions PI, P3, and P4 described in Experimental Example 1 were used.

<Preparation of second primer composition>

As the second primer composition, Polyment NK-350 (trade name; manufactured by Nippon Shokubai Co., Ltd.) was used after dilution. The Polyment NK-350, which is a commercially available product, is a toluene solution with a solid content of 30%. In this example, Polyment NK-350 was diluted with a mixed solvent of toluene/IPA (7:3) to adjust the solid content to 10%, and then used.

<Preparation of adhesive sheet>

(1) Coating of second primer layer to base material

On the surface of a polyethylene terephthalate base material or a plasticized polyvinyl chloride base material, the second primer composition was spread using a wire bar (manufactured by Marukyo Giken K.K.; Wire bar #5) and heated in an oven at 110°C for 2 minutes to coat the base material surface with a second primer layer.

(2) Coating of primer layer to base material

On the primer layer of the base material obtained in (1), one of the primer compositions PI, P3, or P4 was

spread using a wire bar (manufactured by Marukyo Giken K.K.; Wire bar #5) and heated in an oven at 110°C for 2 minutes to prepare a base material in which the primer was laminated on the second primer layer.

(3) Preparation of adhesive agent composition

To 100 parts by mass of silanol-terminated polydimethylsiloxane (trade name: Wacker elastomer 350N; manufactured by Wacker Chemie AG), 60 parts by mass of MQ resin (trade name: MQ803TF; manufactured by Wacker Chemie AG) was added as a tackifier to prepare a silicone-based adhesive agent composition. (4) Preparation of adhesive sheet

On the primer layer of the base material obtained in (2), the silicone-based adhesive agent composition described above was spread using a knife coater in a manner that the thickness of the adhesive layer became 50 μm. Thereafter, the adhesive agent composition was immediately cured by irradiating the silicone-based adhesive agent composition, which was spread, with an electron beam (60 KGy) using an electron beam generating device CB300 at an accelerating voltage of 180 keV. Therefore, adhesive sheets of Working Examples 5 to 8 were produced. Note that, for the base material of Comparative Examples 5 and 6, base materials that do not have the primer layer and second primer layer were used; and, for the base material of Comparative Example 7, a base material in which only the second primer layer was coated was used.

The relation between the obtained adhesive sheets of Working Examples 5 to 8 and Comparative Examples 5 to 7 and the primer compositions PI, P3, and P4 are as described in Table 5.

[Table 5]

| | Primer layer | Second primer layer | Material of base material |
|---|---|---|---|
| Working Example 5 | P1 | Yes | PET |
| Working Example 6 | P4 | Yes | PET |
| Comparative Example 5 | - | None | PET |
| Working Example 7 | P1 | Yes | Polyvinyl chloride |
| Working Example 8 | P3 | Yes | Polyvinyl chloride |
| Comparative Example 6 | - | None | Polyvinyl chloride |
| Comparative Example 7 | - | Yes | Polyvinyl chloride |

<Anchoring characteristic test>

On the surface of the base material of the obtained adhesive sheet, a stainless steel plate was fixed using double-sided adhesive tape (trade name: ST-416; manufactured by 3M), and a fluorosilicone liner was peeled off from the adhesive layer. Thereafter, a piece of silicone tape (trade name: 8403; manufactured by 3M; width: 1 inch) was fixed on the surface of the exposed adhesive layer, and a laminate was obtained. Then, using a 2 kg roller, each layer of the obtained laminate was sufficiently pressure-bonded. Subsequently, each of the pressure-bonded laminate was stored under one of the following storing conditions 1 to 3. Thereafter, the peel strength (N/inch) for the case where the silicone tape was peeled off at an angle of 180° at a rate of 30 cm/min, and the appearance were evaluated.

Storing condition 1: Temperature: 23°C, for 7 days
Storing condition 2: Temperature: 70°C (using an oven), for 7 days
Storing condition 3: Temperature: 65°C (using an oven), relative humidity: 80%RH, for 7 days

Evaluation results for the peel strength are shown in Table 6, and evaluation results for the appearance are shown in Table 7. Note that, in Table 7, "A" refers to a condition where the base material and the adhesive layer were completely separated (i.e. any one of anchoring characteristics between the adhesive layer and the base material, between the adhesive layer and the primer layer, or between the primer layer and the base material was insufficient). "B" refers to a condition where the silicone tape and the adhesive layer were completely separated. "C" refers to a condition where the adhesive layer was separated in a manner that the adhesive layer was broken and some parts of the adhesive layer remained on both the silicone tape and the base material. Furthermore, a numerical value for this evaluation in Table 7 indicates a proportion of the area in which the condition of A, B, or C was observed relative to the area, which was taken to be 10, of the entire contact surface of the base material and the adhesive layer.

[Table 6]

| | Storing condition 1 | Storing condition 2 | Storing condition 3 |
|---|---|---|---|
| Working Example 5 | 9.2 | 10.5 | 8.2 |
| Working Example 6 | 9.4 | 11.3 | 9.4 |
| Comparative Example 5 | 2.9 | 3.4 | 2.9 |
| Working Example 7 | 10.0 | 11.2 | 8.8 |
| Working Example 8 | 9.0 | 12.1 | 9.2 |
| Comparative Example 6 | 2.8 | 3.9 | 2.7 |
| Comparative Example 7 | 2.9 | 9.7 | 5.4 |

[Table 7]

| | Storing condition 1 | | | Storing condition 2 | | | Storing condition 3 | | |
|---|---|---|---|---|---|---|---|---|---|
| | A | B | C | A | B | C | A | B | C |
| Working Example 5 | 0 | 3 | 7 | 0 | 5 | 5 | 0 | 2 | 8 |
| Working Example 6 | 0 | 9 | 1 | 0 | 8 | 2 | 0 | 6 | 4 |
| Comparative Example 5 | 10 | 0 | 0 | 10 | 0 | 0 | 10 | 0 | 0 |
| Working Example 7 | 0 | 4 | 6 | 0 | 5 | 5 | 0 | 8 | 2 |
| Working Example 8 | 0 | 8 | 2 | 0 | 3 | 7 | 0 | 2.5 | 7.5 |
| Comparative Example 6 | 10 | 0 | 0 | 10 | 0 | 0 | 10 | 0 | 0 |
| Comparative Example 7 | 10 | 0 | 0 | 10 | 0 | 0 | 10 | 0 | 0 |

The adhesive sheets of Working Examples 5 to 8 exhibited sufficient anchoring characteristics even after being stored under one of the storing conditions 1 to 3. On the other hand, for the adhesive sheets of Comparative Examples 5 to 7, there were many cases where the base material and the adhesive layer were separated. The adhesive sheets of Comparative Examples 5 to 7 exhibited insufficient anchoring characteristics.

## Claims

**1.** An adhesive sheet comprising:

a base material, a primer layer, and an adhesive layer cured by radiation, arranged in this order;
wherein the primer layer contains a cross-linked polyurethane comprising a polyol and a polyisocyanate;
wherein the polyol is selected from the group consisting of a polyoxypropylene polyol, a polyoxyethylene polyoxypropylene polyol, and combinations thereof; and
wherein the polyisocyanate contains a tri- or higher-functional polyisocyanate.

**2.** The adhesive sheet according to claim 1, wherein the adhesive layer is a silicone-based adhesive layer.

**3.** The adhesive sheet according to claim 1, further comprising a polyol containing a tri- or higher-functional polyol **characterized by** a number average molecular weight of less than 150.

**4.** The adhesive sheet according to claim 1, wherein the polyol is a polyoxyethylene polyoxypropylene polyol, and wherein a mass of an oxypropylene unit relative to a mass of an oxyethylene unit is 0.25 or greater.

**5.** The adhesive sheet according to any one of claims 1 to 4, further comprising a second primer layer containing a (meth)acrylic polymer having a nitrogen containing group in-between the base material and the primer layer.

## Patentansprüche

1. Eine Klebefolie, umfassend:

   ein Basismaterial, eine Primerschicht und eine durch Strahlung gehärtete Klebstoffschicht, die in dieser Reihenfolge angeordnet sind;
   wobei die Primerschicht ein vernetztes Polyurethan enthält, das ein Polyol und ein Polyisocyanat umfasst;
   wobei das Polyol ausgewählt ist aus der Gruppe bestehend aus einem Polyoxypropylenpolyol, einem Polyoxyethylenpolyoxypropylenpolyol und Kombinationen davon; und
   wobei das Polyisocyanat ein tri- oder höherfunktionelles Polyisocyanat enthält.

2. Die Klebefolie nach Anspruch 1, wobei die Klebstoffschicht eine Klebstoffschicht auf Silikonbasis ist.

3. Die Klebefolie nach Anspruch 1, ferner umfassend ein Polyol, das ein tri- oder höherfunktionelles Polyol enthält, **gekennzeichnet durch** ein zahlenmittleres Molekulargewicht von weniger als 150.

4. Die Klebefolie nach Anspruch 1, wobei das Polyol ein Polyoxyethylenpolyoxypropylenpolyol ist und wobei eine Masse einer Oxypropyleneinheit relativ zur Masse einer Oxyethyleneinheit 0,25 oder größer ist.

5. Die Klebefolie nach einem der Ansprüche 1 bis 4, ferner umfassend eine zweite Primerschicht, die ein (Meth)acrylpolymer enthält, das eine stickstoffhaltige Gruppe zwischen dem Basismaterial und der Primerschicht aufweist.

## Revendications

1. Feuille adhésive comprenant :

   un matériau de base, une couche d'apprêt, et une couche adhésive durcie par rayonnement, agencés dans cet ordre ;
   dans laquelle la couche d'apprêt contient un polyuréthane réticulé comprenant un polyol et un polyisocyanate ;
   dans laquelle le polyol est choisi dans le groupe constitué d'un polyoxypropylène polyol, d'un polyoxyéthylène polyoxypropylène polyol, et de combinaisons de ceux-ci ; et
   dans laquelle le polyisocyanate contient un polyisocyanate à trois fonctionnalités ou plus.

2. Feuille adhésive selon la revendication 1, dans laquelle la couche adhésive est une couche adhésive à base de silicone.

3. Feuille adhésive selon la revendication 1, comprenant en outre un polyol contenant un polyol à trois fonctionnalités ou plus **caractérisé par** une masse moléculaire moyenne en nombre inférieure à 150.

4. Feuille adhésive selon la revendication 1, dans laquelle le polyol est un polyoxyéthylène polyoxypropylène polyol, et dans laquelle une masse d'un motif oxypropylène par rapport à une masse d'un motif oxyéthylène vaut 0,25 ou plus.

5. Feuille adhésive selon l'une quelconque des revendications 1 à 4, comprenant en outre une deuxième couche d'apprêt contenant un polymère (méth)acrylique ayant un groupe contenant de l'azote entre le matériau de base et la couche d'apprêt.